# EUROPEAN PATENT SPECIFICATION

(11) **EP 1 800 808 B1**
(45) Date of publication and mention of the grant of the patent: **28.10.2009**
(21) Application number: 05785701.3
(22) Date of filing: 21.09.2005
(51) Int. Cl.: B25J 9/00, B25J 9/06, B25J 9/04, B25J 5/02

(54) **PROCESSING AND TRANSFERRING APPARATUS**
BEARBEITUNGS- UND ÜBERTRAGUNGSVORRICHTUNG
APPAREIL DE TRAITEMENT ET DE TRANSFERT

(30) Priority: 04.10.2004 JP 2004291048
(43) Date of publication of application: 27.06.2007
(73) Proprietor: HONDA MOTOR CO., LTD., Tokyo 107-8556 (JP)
(72) Inventor: OHTAKE, Yoshito, HONDA ENGINEERING CO., LTD., Hagagun, Tochigi 3213395 (JP); MIWA, Hiroshi, HONDA ENGINEERING CO., LTD., Hagagun, Tochigi 3213395 (JP); KITAMURA, Nagahisa, HONDA ENGINEERING CO., LTD., Hagagun, Tochigi 3213395 (JP)
(74) Representative: Rupp, Christian
(86) International application number: PCT/JP2005/017351
(87) International publication number: WO 2006/038463

(56) References cited:
- WO-A-92/18293
- GB-A- 2 132 981
- JP-A- 6 312 385
- JP-A- 58 004 381
- US-A- 5 130 632

## Description

### Technical Field

The present invention relates to apparatuses used for machining and conveying various works and, in particular, to a machining and conveying apparatus which has a machining or retaining unit for works at a front end of a multi-joint movable arm, according to the preamble of claim 1.

### Background Art

As such a kind of apparatuses, apparatuses disclosed in, for example, Patent Documents 1 and 2 are known.

In the apparatus disclosed in Patent Document 1, a base end of a movable arm is supported to a base or the like so as to be movable rotationally about a horizontal rotation shaft, a plurality of joints movable rotationally about a vertical rotation shaft are provided to the movable arm, and a machining unit is provided to a front end of the movable arm.

In the apparatus disclosed in Patent Document 2, a base end of a movable arm is supported to a base or the like so as to be movable rotationally about a vertical rotation shaft, a plurality of joints movable rotationally about a horizontal rotation shaft are provided to the movable arm, and a machining unit is mounted to a front end of the movable arm so as to be movable rotationally about a vertical rotation shaft.
Patent Document 1: Japanese Patent Application Laid-Open No. 5-23992 (FIG. 2)
Patent Document 2: Japanese Patent Application Laid-Open No. 2-24076 (FIG. 3)

In both these conventional arts, however, since joint portions of the movable arm with respect to the base or the like can move rotationally only to one axial direction, a moving range of the movable arm is narrow, and the degree of operational freedom of the movable arm is not high, thereby making the machining of some works having certain sizes and shapes difficult.

The document US-A-5130632 discloses an apparatus having two movable arms connected to a base plate by means of a first rotational moving unit and a second rotational moving unit having a rotation shaft perpendicular to the rotation shaft of the first moving unit.

The base plate is connected to the base by a heavy and cumbersome articulated arm.

### Means for Solving the Problems

The problems of the prior art are solved by means of an apparatus according to claim 1.

### Effects of the Invention

The advantageous effects of the invention are described in details below, especially those concerning the features of the characterizing part of claim 1.

### Best Mode for Carrying Out the Invention

An embodiment of the present invention is explained in detail below with reference to accompanying drawings.

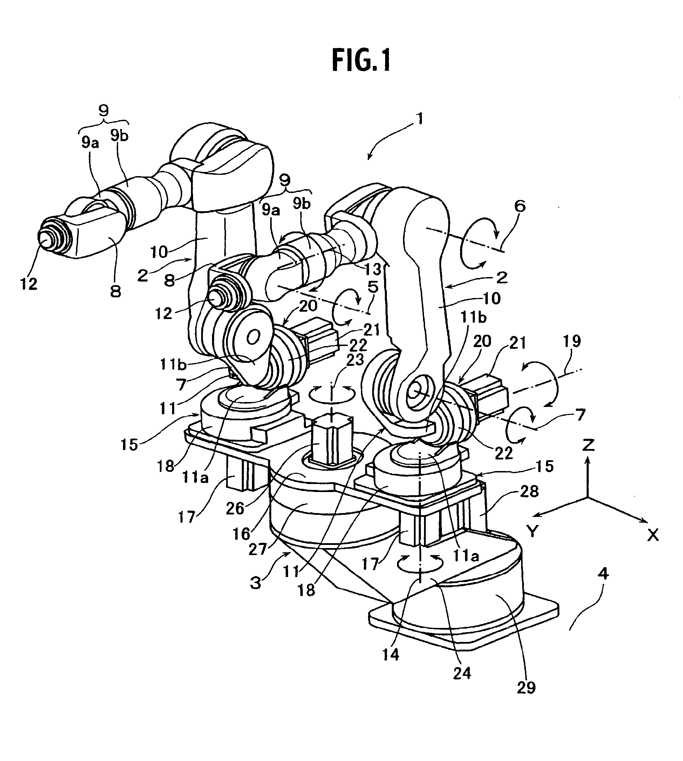

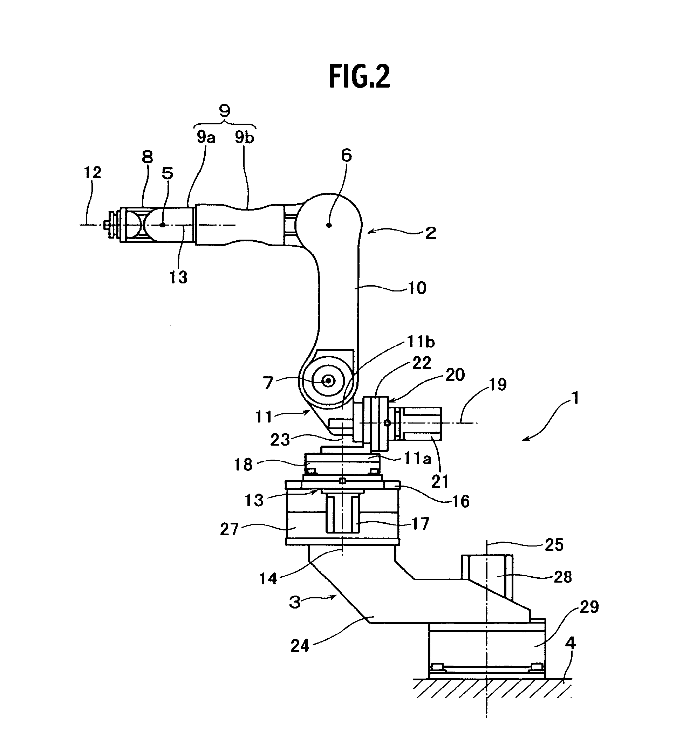

FIG. 1 is a perspective view illustrating a machining and conveying apparatus of the present invention, and FIG. 2 is a diagram viewed from an X axial direction of FIG. 1.

This machining and conveying apparatus 1 has a pair of multi-joint movable arms 2, and the movable arms 2 are mounted to a base 4 via a revolving device 3. Each of the movable arms 2 has three joints which move rotationally about rotation shafts 5, 6 and 7 facing one direction (X axial direction in FIG. 1).

A bolt conclusion device as a machining unit or a work grip device as a retaining unit (not shown), for example, are mounted to an arm piece 8 at the front end in arm pieces (8 to 11) connected by these joints so as to be movable rotationally about a rotation shaft 12 vertical to the rotation shafts 5, 6 and 7 of each joint. An arm piece 9 adjacent to the arm piece 8 at the front end is divided into two in a longitudinal direction, and its front end portion 9a is connected to a base end portion 9b so as to be movable rotationally about a rotation shaft 13 in the longitudinal direction. The rotation shafts 5, 6, 7, 12 and 13 are driven by a motor (not shown).

On the other hand, the arm piece 11 at the base end of the movable arm 2 is provided to a base plate (portion to be wrapped) 16 of the revolving device 3 via a first rotational moving unit 15 so as to move rotationally about a rotation shaft 14 in a direction vertical to the rotation shafts 5, 6 and 7 of each joint (a Z axial direction in FIG. 1). The rotational moving unit 15 fixes a motor 17 to the base plate 16 and transmits its output to the base end of the movable arm 2 via a reduction gear 18. Each of the movable arms 2,2 is installed upright on both ends of the base plate 16, and the motor 17 is installed securely to installation places of the movable arms 2,2 at the lower surface of the base plate 16.

A second rotational moving unit 20, which rotationally moves the movable arm 2 about a rotation shaft 19 facing a direction vertical to both the rotation shaft 14 of the first rotational moving unit 15 and the rotation shafts 5, 6 and 7 of the joints (a Y direction in FIG. 1), is provided to an intermediate portion of the arm piece 11 at the base end. The rotational moving unit 20 fixes a motor 21 to a lower portion 11a of the arm piece 11 at the base end, and transmits its output to an upper portion 11b of the arm piece 11 at the base end via a reduction gear 22.

The revolving device 3 composes a link mechanism which revolves the movable arms 2 with respect to the base 4. That is to say, the center of the base plate 16 is supported to one end of an L-shaped arm 24 so as to move rotationally about a rotation shaft 23 facing a Z axial direction, whereas the other end of the L-shaped arm 24 is supported to the base 4 so as to move rotationally about a rotation shaft 25 parallel with the rotation shaft 23 (see FIG. 2). The rotation shaft 23 is arranged so as to be perpendicular to a middle point of a segment for connecting the rotation shafts 14,14 of the first rotational moving units 15.

A motor 26 is installed securely to an upper surface of the center of the base plate 16, and a reduction gear 27 is installed between the center of the base plate 16 and the upper end of the L-shaped arm 24. The output from the motor 26 is transmitted to the upper end of the L-shaped arm 24 via the reduction gear 27, so as to revolve the base plate 16 with respect to the L-shaped arm 24. In accordance with the revolving of the base plate 16, the motors 17,17 installed securely to the lower surfaces of both ends of the base plate 16 revolves about the reduction gear 27.

A motor 28 is installed securely to the upper surface of the other end of the L-shaped arm 24, and a reduction gear 29 is installed between the other end of the L-shaped arm 24 and the base 4. The output from the motor 28 is transmitted to the base 4 via the reduction gear 29 so as to revolve the L-shaped arm 24 with respect to the base 4.

An operation of the machining and conveying apparatus 1 in this embodiment is explained below.

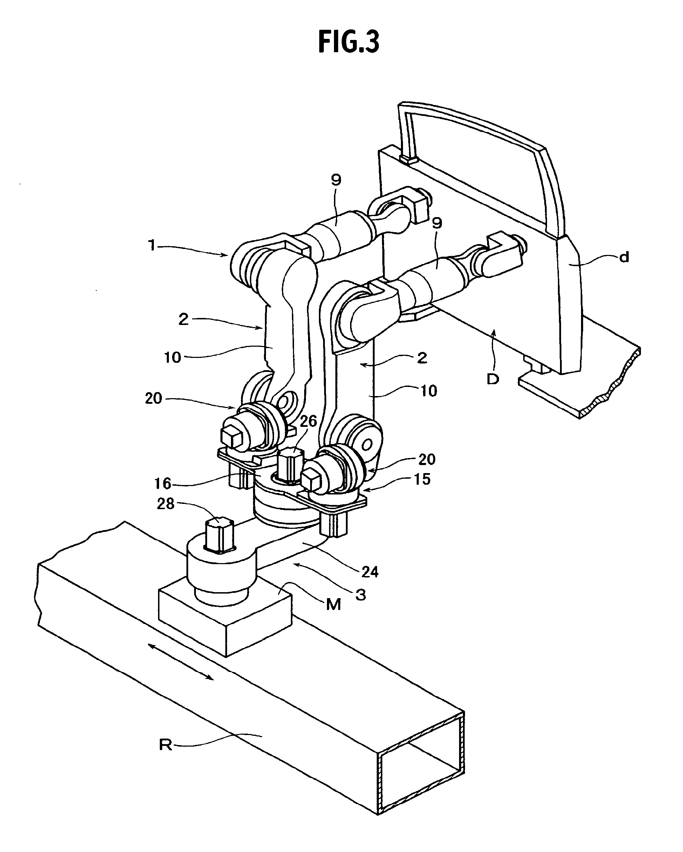

The machining and conveying apparatus 1 is, as shown in FIG. 3 for example, installed to an assembly line of a side door D of an automobile. In this case, the machining and conveying apparatus 1 is installed to a mobile object M which runs on a rail R along a conveying direction of the side door D.

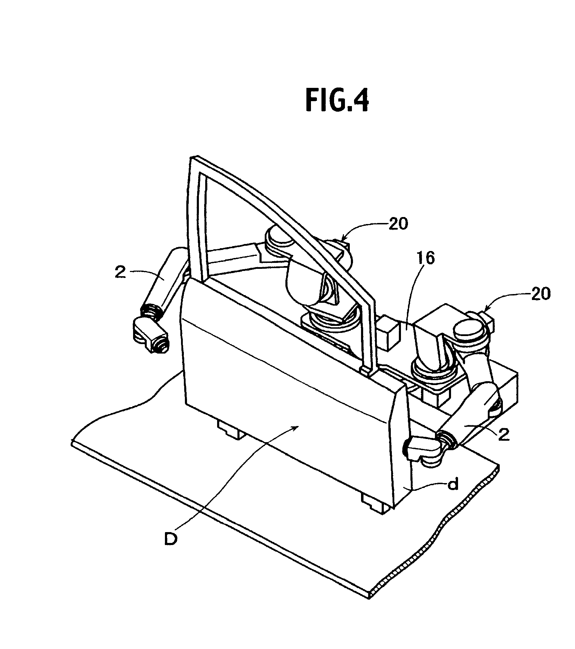

When a front face or a rear face of the side door D is machined, the motor 28 is operated as shown in FIG. 3, the front end of the L-shaped arm 23 is turned to a work side, the motor 26 is operated so as to arrange the base plate 16 along the work, and the arm pieces 10,10 of the right and left movable arms 2,2 are made to be upright. Different types of side doors D are conveyed to a machining station, and the end surfaces d at the front and rear of the side doors D occasionally require machining. In this case, the second rotational moving units 20,20 are operated as shown in FIG. 4, the right and left movable arms 2,2 may be pulled down to the outside. That is to say, the end surfaces d of the front and rear of the side door D can be machined by one apparatus simultaneously, so that working efficiency is improved dramatically.

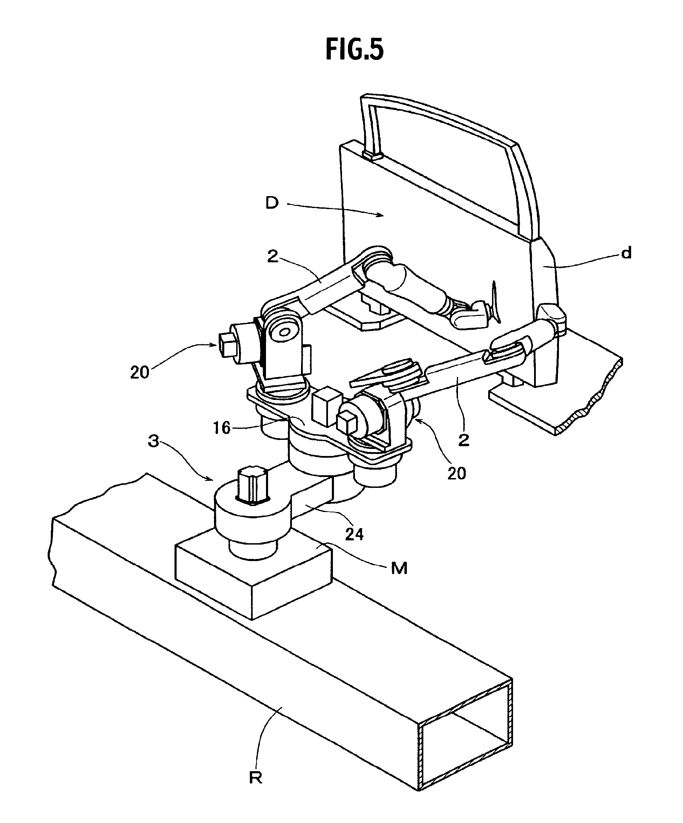

Further, when the end surfaces d and the rear face of the side D are machined simultaneously, the right and left movable arms 2 may be pulled down to the same direction as shown in FIG. 5. Further, since the movable arms 2 can be moved rotationally to three axial directions, the degree of operational freedom is high, and various types of the side doors D can be subject to complicated and precision machining.

In the machining and conveying apparatus 1 of this embodiment, since the rotation shaft 19 facing the Y axial direction in FIG. 1 is added to the arm piece 11 at the base end of the movable arm 2 so that the connected portions of the movable arms 2 with respect to the base plate 16 can move rotationally to two axial directions, the moving range of the movable arms 2,2 is widened, and the degree of the operational freedom of the movable arms 2 is heightened.

For this reason, even if the machining position varies in accordance with the types of works to be machined, the first and second rotational moving units 15 and 20 and the joints of the movable arms 2 are suitably moved rotationally, so that the machining units at the front ends of the movable arms 2 can be moved smoothly to the machining position of works and constraint of machining conditions can be eased greatly.

Further, since the movable arms 2 can be moved rotationally to the three axial directions by the joints and the first and second rotational moving units 15 and 20 and the degree of the operational freedom is improved greatly, the operation of the movable arms 2 becomes smooth, and thus various works can be subject to the complicated and precision machining.

In the machining and conveying apparatus 1, the movable arms 2 are installed to the base 4 via the revolving device 3, but since the revolving device 3 is composed of the link mechanism which is constituted by pivotally connecting the base plate 16 and the L-shaped arm 24, the moving range of the movable arms 2 with respect to the installation places of the base is widened and the following advantage is provided.

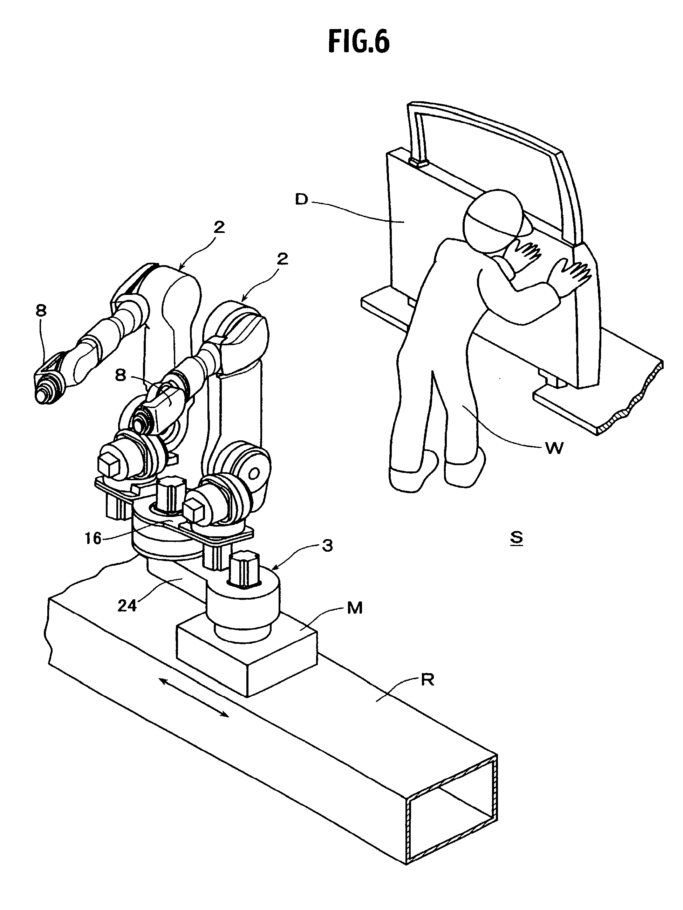

That is to say, when the side door D is machined, the front end of the L-shaped arm 24 is turned to the work side, but when the machining is halted, the base plate 16 and the L-shaped arm 24 are folded along the rail R as shown in FIG. 6, and the front ends of the right and left movable arms 2 may be turned to a side opposite to the side door D. That is to say, since the movable arms 2,2 can be evacuated from skidding S, the movable arms 2,2 do not disturb the work operation of a worker W. Since the movable arms 2,2 revolve about the mobile object M, the work may be arranged on both sides of the rail R.

In the revolving device 3, the motor 26 is installed securely to the upper surface of the center of the base plate 16, the reduction gear 27 is installed between the center of the base plate 16 and the upper end of the L-shaped arm 24, and the motor 17 is installed securely to the lower surfaces of both the ends of the base plate 16. For this reason, the motors 17,17 are revolved about the reduction gear 27 in accordance with the revolving of the base plate 16. The three motors 17,17 and 26 and the reduction gear 27 are reasonably arranged on the base plate 16 in such a manner so that the revolving device 3 is downsized.

The above embodiment explains the case where the side door D of automobiles is machined by the apparatus of the present invention, but the present invention is not limited to the use as the machining apparatus, and thus the retaining unit is provided to the front end of the movable arm 2 so that the apparatus can be used as the conveying apparatus for various works.

### Brief Description of the Drawings

[FIG. 1] FIG. 1 is a perspective view illustrating a machining and conveying apparatus of the present invention;
[FIG. 2] FIG. 2 is a diagram viewed from an X axial direction of FIG. 1;
[FIG. 3] FIG. 3 is a perspective view illustrating a use aspect of the machining and conveying apparatus;
[FIG. 4] FIG. 4 is a perspective view illustrating a use aspect of the machining and conveying apparatus;
[FIG. 5] FIG. 5 is a perspective view illustrating a use aspect of the machining and conveying apparatus; and
[FIG. 6] FIG. 6 is a perspective view illustrating a use aspect of the machining and conveying apparatus.

## Claims

1. A machining and conveying apparatus having a movable arm (2) having a plurality of joints rotationally moving about rotation shafts (5, 6, 7) in one direction and a machining or retaining unit provided to a front end of the movable arm (2), wherein the apparatus comprises:
a first rotational moving unit (15) provided between a base end of the movable arm (2) and a base plate (16) so as to rotationally move the moveable arm (2) about a rotation shaft(14) crossing the rotation shafts (5, 6, 7) of the joints; and
a second rotational moving unit (20) provided to an arm piece (11) at the base end of the movable arm (2) so as to rotationally move the movable arm (2) about a rotation shaft (19) perpendicular to both the rotation shaft (14) of the first rotational moving unit and the rotation shafts (5, 6, 7) of the joints,
wherein the first rotational moving unit (15) includes a first motor (17), and the second rotational moving unit (20) includes a second motor (21) fixed to a lower portion (11a) of the arm piece (11) and transmitting an output of the second rotational moving unit (20) to an upper portion (11b) of the arm piece (11),
**characterized in that,**
the first motor (17) is fixed at a lower surface of the base plate, and the center of the base plate (16) is supported to one end of an L-shaped arm (24) to move rotationally about a rotation shaft (23) and the other end of the L-shaped arm (24) is supported to a base (4) to move rotationally about a rotation shaft (25) parallel with the rotation shaft (23).

## Patentansprüche

1. Bearbeitungs- und Fördervorrichtung, welche einen bewegbaren Arm (2) aufweist, welcher eine Vielzahl von Gelenken, welche sich um Drehwellen (5, 6, 7) in einer Richtung bewegen, und eine Bearbeitungs- oder Halteeinheit aufweist, welche auf einem vorderen Ende des bewegbaren Arms (2) vorgesehen ist, wobei die Vorrichtung umfasst:
eine erste Drehbewegungseinheit (15), welche zwischen einem Basisende des bewegbaren Arms (2) und einer Basisplatte (16) vorgesehen ist, um so den bewegbaren Arm (2) drehend um eine Drehwelle (14) zu bewegen, welche die Drehwellen (5, 6, 7) der Gelenke kreuzt; und
eine zweite Drehbewegungseinheit (20), welche an einem Armstück (11) an dem Basisende des bewegbaren Arms (2) vorgesehen ist, um so den bewegbaren Arm (2) drehend um eine Drehwelle (19), welche senkrecht zu sowohl der Drehwelle (14) der ersten Drehbewegungseinheit und den Drehwellen (5, 6, 7) der Gelenke ist, zu bewegen, wobei die erste Drehbewegungseinheit (15) einen ersten Motor (17) enthält, und die zweite Drehbewegungseinheit (20) einen zweiten Motor (21) enthält, welcher an einem unteren Abschnitt (11a) des Armstücks (11) fixiert ist und eine Ausgabe der zweiten Drehbewegungseinheit (20) an einen oberen Abschnitt (11b) des Armstücks (11) überträgt,
**dadurch gekennzeichnet, dass**
der erste Motor (17) an einer unteren Oberfläche der Basisplatte fixiert ist, und das Zentrum der Basisplatte (16) an einem Ende eines L-förmigen Arms (24) gelagert ist, um sich drehend um eine Drehwelle (23) zu bewegen, und das andere Ende des L-förmigen Arms (24) an einer Basis (4) gelagert ist, um sich drehend um eine Drehwelle (25) parallel mit der Drehwelle (23) zu bewegen.

## Revendications

1. Appareil d'usinage et de transport ayant un bras mobile (2) ayant une pluralité de joints qui se déplacent de manière rotative autour d'arbres de rotation (5, 6, 7) dans une direction et une unité d'usinage ou de retenue prévue sur une extrémité avant du bras mobile (2), dans lequel l'appareil comprend :
une première unité mobile rotative (15) prévue entre une extrémité de base du bras mobile (2) et une plaque de base (16) afin de déplacer de manière rotative le bras mobile (2) autour d'un arbre de rotation (14) traversant les arbres de rotation (5, 6, 7) des joints ; et une seconde unité mobile rotative (20) prévue sur une pièce de bras (11) au niveau de l'extrémité de base du bras mobile (2) afin de déplacer de manière rotative le bras mobile (2) autour d'un arbre de rotation (19) perpendiculaire à la fois à l'arbre de rotation (14) de la première unité mobile rotative et aux arbres de rotation (5, 6, 7) des joints, dans lequel la première unité mobile rotative (15) comprend un premier moteur (17), et la seconde unité mobile rotative (20) comprend un second moteur (21) fixé sur une partie inférieure (11a de la pièce de bras (11) et transmettant une sortie de la seconde unité mobile rotative (20) à une partie supérieure (11b) de la pièce de bras (11),
**caractérisé en ce que** :
le premier moteur (17) est fixé au niveau d'une surface inférieure de la plaque de base, et le centre de la plaque de base (16) est supporté sur une extrémité d'un bras en forme de L (24) pour se déplacer en rotation autour d'un arbre de rotation (23) et l'autre extrémité du bras en forme de L (24) est supportée sur une base (4) pour se déplacer en rotation autour d'un arbre de rotation (25) parallèle à l'arbre de rotation (23).
